# EUROPEAN PATENT APPLICATION

(11) **EP 4 782 739 A1**
(43) Date of publication of application: **29.07.2026**
(21) Application number: 25223984.3
(22) Date of filing: 16.12.2025
(51) Int. Cl.: F16P 3/14, G05B 9/02, G05B 19/042, G05B 19/406

(54) **PLANT AND METHOD FOR MACHINING A SEMIPRODUCT**

(30) Priority: 28.01.2025 IT 202500001446
(71) Applicant: SCM Group S.p.A., 47921 Rimini (RN) (IT)
(72) Inventor: BILLI, Denis, 47921 Rimini (RN) (IT); BALDAZZI, Fabrizio, 47921 Rimini (RN) (IT)
(74) Representative: Gallo, Gianluca

(57) **Abstract**

Described is a plant (1) for machining semi-products, in particular pieces of wood or similar, comprising one or more machines (10), a machining path (L) passing through the one or more machines (10) and a safety apparatus (100) integrated with or connected to the machines (10) to prevent an operator from carrying out dangerous operations within the machining path (L) during the operating phase. The plant (1) further includes a supervision apparatus (200), connected to the machines (10) and to the safety apparatus (100), which comprises at least one visual acquisition device (201) for capturing images of the machining path (L) and generating data representative of such images. A computer (E), connected to the visual acquisition device (201), receives and analyses the image data to detect dangerous operations carried out by the operator if the safety apparatus has not prevented them from being performed.

## Description

The present invention is classified in the manufacturing industry and relates to a plant and a method for the machining semi-products, in particular pieces of wood or the like.

In the present description, the term "semi-products" is intended to mean materials or components subjected to one or more preliminary machining steps, which need further treatments in order to be completed. Such semi-products include, by way of example but not limited to, pieces of natural or processed wood, wood-derived panels (for example, MDF, plywood or chipboard) and materials of a similar nature, such as plastics, composites or other materials possessing mechanical and physical characteristics compatible with the processes described.

In the field pertaining to the present invention, plants are known for the machining of semi-products, in particular pieces of wood or the like, which comprise one or more machines configured to perform specific machining operations on the semi-product, jointly defining a machining path of the semi-product. These plants are generally provided with safety equipment which is integral or connected to the machines, designed to prevent an operator from accessing the machining path during the operational phases. The Applicant has observed that, despite being widely used, the prior art plants for the machining semi-products present a series of problems that may compromise their operational safety, exposing operators to significant risks. In particular, the safety equipment, designed to prevent accidents, may not adequately perform its protective function under various circumstances.

A first problem noted concerns the malfunctions or breakages of the equipment itself. Components such as sensors, photocells or safety switches can be subject to wear, accidental damage or manufacturing defects, reducing their ability to detect abnormal conditions or to intervene promptly to block the plant. Similarly, physical barriers or containment guards can undergo deformation or structural failure, compromising their ability to protect operators from contact with moving parts or tools.

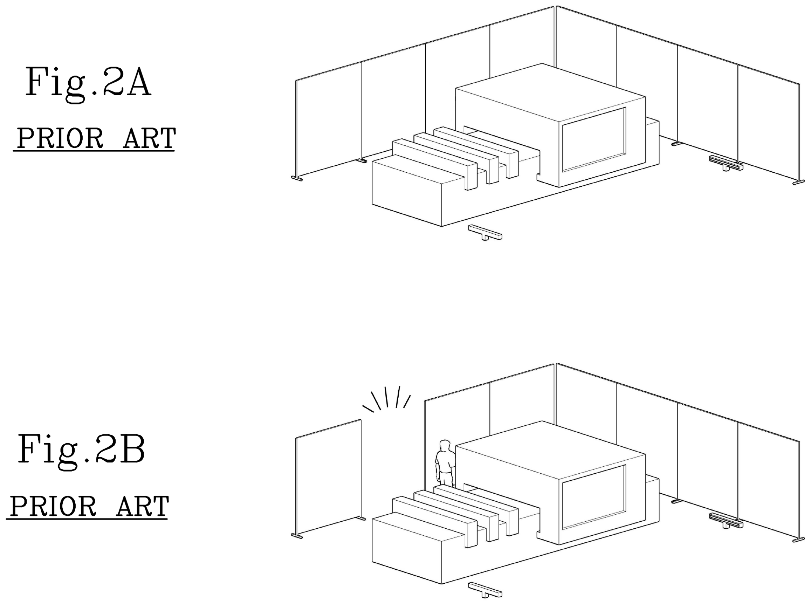

A further problem, of a behavioural nature, concerns the possibility that the operators themselves tamper with or voluntarily deactivate the safety equipment in order to perform certain operations. In some situations, in fact, the operators may perceive the safety equipment as an obstacle, for example during maintenance, adjustment or removal of semi-products blocked in the machining path. Actions such as deactivating the photocells, removing barriers or inhibiting the sensors for the opening of the protective guards during the operational phases of the plant can expose operators to direct risks, compromising the overall effectiveness of the safety apparatus. In other words, the Applicant has found that the currently known safety apparatuses, while integrating advanced technologies, are not designed to ensure complete supervision or to actively prevent incorrect behaviour. Figure 2A shows an example of a plant of known type comprising a machine configured to operate on a semi-product and defining a machining path of the semi-product itself. The plant comprises a safety apparatus provided with at least one protective panel suitable for preventing an operator from accessing the area surrounding the machine, the machine itself and/or the machining path of the semi-product.

Figure 2B instead shows a situation in which a portion of the panel has been tampered with in such a way that access can be gained to the area surrounding the machine, the machine itself, and more generally, the machining path of the semi-product, thus being able to carry out a dangerous operation, an operation that the panel cannot prevent as it is partially removed.

In this context, the technical task of the present invention is therefore to provide a plant and a method for machining semi-products, in particular pieces of wood or the like, which overcome the drawbacks of the prior art. The aim of the present invention is therefore to provide a plant and a method for the machining of semi-products, in particular pieces of wood or the like, which is able to guarantee a higher level of operational safety, reducing the risks for operators even in the event of malfunctions, wear or non-compliant behaviour.

The technical purpose indicated and the specified aim are substantially achieved by a plant for the machining of a semi-product, in particular a piece of wood or the like, comprising the technical characteristics set forth, respectively, in claim 1 and/or in one or more of the claims dependent thereon and/or in the description.

The plant comprises one or more machines configured for machining a semi-product, in particular a piece of wood or the like.

The plant comprises a machining path passing through the one or more machines.

The term "machining path" means the physical trajectory along which a semi-product, such as a piece of wood or the like, is transported and machined within the plant. This path includes the different phases in which the semi-product, set in motion by transport systems or mechanical devices, passes through a series of machines that perform specific operations such as cutting, milling, sanding or other necessary machining operations. The machining path is therefore defined by a physical sequence of machines and devices that operate on a semi-product, transporting it and subjecting it to specific machining operations, in order to transform it into a finished product.

In particular, the plant may comprise a single operating machine or a plurality of interconnected machines, configured to work in sequence or in parallel, in order to carry out the machining of the semi-product. The one or more machines are arranged in series or in modular configurations, in such a way as to define a continuous and structured machining path for the semi-product.

The plant includes a safety apparatus, integral with and/or connected to one or more machines, suitable for preventing an operator from carrying out dangerous operations within the machining path during an operational phase of the plant.

The term "safety apparatus" is intended to refer to an integrated apparatus of devices and design solutions aimed at ensuring the protection of operators during the operation of the plant, preventing potential accidents arising from contact with moving parts or active tools. These devices are configured to create a safe operating environment, intervening directly or indirectly on the control of access to the dangerous areas.

According to an example, the safety apparatus may comprise physical barriers, configured to prevent unintentional or unauthorised access by operators to the machining path.

According to a further example, the safety apparatus may comprise containment guards, configured to enclose the moving parts of the machinery and/or the active tools, with the dual function of preventing the accidental contact of the operator with the moving parts or tools of the respective machine and of containing any fragments or materials projected during the machining operations.

Both the barriers and the guards can include advanced detection systems, such as magnetic sensors, which can detect whether the guards are correctly positioned and, if not, automatically deactivate the operations of the plant.

According to a further example, the safety apparatus may comprise active detection systems, based on photocells and/or motion sensors, for example configured to monitor the surrounding operating area and stop the plant if an unforeseen movement is detected.

In other words, the term "prevent" within the context of the present invention, adopts nuances that go beyond the simple concept of physical block. The term preventing can mean implementing an active and direct action, as in the case of physical barriers or containment guards, which materially hinder access or contact with dangerous elements. However, it can also include indirect and preventive intervention, such as the use of sensors or detection systems that monitor the environment and signal potential risk situations. In this sense, the term preventing is not limited to prohibiting, but can imply a warning or a deterrent measure that discourages the operator from carrying out a dangerous operation, creating a prohibition that is both concrete and perceived, thus helping to prevent accidents.

In accordance with a main aspect of the present invention, the plant comprises a supervision apparatus comprising at least one visual acquisition device configured to capture images of the machining path and to generate data representative of the captured images, and a computer, connected to the at least one visual acquisition device and configured to receive the data representative of the captured images and analyse said data in such a way as to detect dangerous operations carried out by the operator if the safety apparatus has not prevented it from being carried out. In other words, the computer analyses the data of the images captured by the at least one visual acquisition device to identify any dangerous operations carried out by the operator. In practice, the computer checks whether there are dangerous operations in progress that the safety apparatus has failed to prevent.

The term "visual acquisition device" means an electronic device designed to capture images or videos of the machining path. These devices are able to capture visual information in real time, which is then processed to detect dangerous situations. The most common form of embodiment of a visual capture device is represented by video cameras, which can be of different types, such as closed-circuit video cameras (CCTV), high-definition video cameras or thermal video cameras. Depending on the specific application and visibility requirements, video cameras with night vision, panoramic or infrared capabilities could be used. Regardless of the specific type, the device must be able to adequately monitor the machining path and provide sufficiently clear and detailed images to allow accurate analysis by the computer.

In the event that the plant is particularly complex, the supervision apparatus may comprise a plurality of visual acquisition devices, arranged at strategic points in order to simultaneously monitor different sections of the machining path. The use of multiple devices allows a more complete visual coverage to be obtained and to improve the reliability of the analysis, minimizing blind spots and ensuring greater precision in the identification of dangerous situations.

The visual acquisition devices can be positioned at various points within the plant based on monitoring needs. For example, in order to obtain an overall view of the machining path and any machines involved, the visual acquisition devices can be installed at high points or on fixed structures, so as to cover the entire machining flow. Alternatively or simultaneously, the visual acquisition devices can be positioned inside the one or more of the machines themselves, in correspondence with critical areas or zones where high-risk operations occur, such as cutting, milling or other dangerous machining operations.

Likewise, the term "dangerous operations" means any action or intervention that exposes operators to a direct risk of injury or accident during the operation of the plant. This may result from non-compliant behaviour, such as unauthorised access to machining areas or improper handling of machinery and safety devices, or from situations where the safety apparatus, due to malfunction or deactivation, fails to prevent such actions. The "dangerous operations" also include activities that may compromise the integrity of the machining path or the general operational safety of the plant, increasing both the risk of injury to the operators and damage to the machinery itself. Although reference is made in the plural to "dangerous operations," it is clear that the risk can also arise from a single dangerous operation.

The technical purpose indicated and the specified aim are substantially achieved by a method for the machining of a semi-product, in particular a piece of wood or the like, comprising the technical characteristics set forth, respectively, in claim 12 and/or in one or more of the claims dependent thereon and/or in the description.

The method can be carried out by means of the above-mentioned plant. The method comprises one or more machining operation on the semi-product using one or more machines, with the semi-product moved along a machining path that passes through the above-mentioned machines.

The method comprises a step of preventing an operator from carrying out dangerous operations in the machining path by means of a safety apparatus.

According to the invention, the method comprises a step of capturing images of the machining path using at least one visual acquisition device, generating data representative of the captured images. Subsequently, the data are analysed by a computer in order to detect any dangerous operations carried out by the operator in the event that the safety apparatus has failed to prevent them from being carried out.

The Applicant has found that the integration of a supervision apparatus guarantees a series of advantages that allow the problems identified in the prior art to be overcome in an optimal and effective manner. In fact, thanks to the use of a visual acquisition device and a dedicated computer, the plant is able to detect dangerous operations with a greater precision and timeliness than the traditional systems. This feature allows the limitations deriving from malfunctions or failures of conventional safety apparatuses to be overcome, since the supervision system acts as an additional level of control, which is capable of monitoring and verifying the status of the physical barriers, sensors and the other devices integrated into the plant. A further advantage of the supervision system lies in its ability to actively prevent non-compliant behaviour by operators. Thanks to the continuous analysis of the captured images, the computer can identify abnormal operations, such as the removal of barriers or the deactivation of photocells, intervening promptly to signal the risk or block the plant. This approach significantly reduces the likelihood that operators can circumvent safety measures, directly addressing one of the main critical points of traditional plants. Furthermore, the supervision system allows constant supervision of the operating status of the plant, guaranteeing an immediate diagnosis of any anomalies or faults. For example, a deformed guard or a damaged photocell can be detected automatically, preventing the malfunction from going unnoticed until operational safety is compromised. This capacity reduces not only the risks for operators, but also unplanned downtime, improving the overall production efficiency of the plant.

Finally, the presence of a supervision system based on intelligent processing of the images introduces an element of redundancy that strengthens the robustness of the entire safety apparatus.

The plant and the method according to the invention may also comprise one or more of the technical aspects which will be described below.

The technical characteristics that will be described below can be applied, where compatible, both to the plant and to the method according to the present invention, without the need for explicit distinction.

According to one aspect, the computer may be configured to autonomously activate one or more response actions if it detects the above-mentioned dangerous operations. Advantageously, this autonomous activation capability allows the plant to react promptly to dangerous situations without requiring manual intervention by the operator.

According to one aspect, the computer may be configured to identify a predetermined type of the above-mentioned dangerous operations and to autonomously activate the one or more response actions as a function of the type of the dangerous operation identified. In other words, the computer can be configured to recognise specific types of dangerous situations and to automatically activate the necessary actions based on the nature of the threat detected.

In accordance with one aspect, the supervision apparatus may comprise a memory unit, connected to the computer, in which tables are pre-stored that correlate the predetermined types of dangerous operations to the response actions to be activated according to each type of dangerous operation. The computer may then be configured to activate the one or more actions based on such correlation tables. In other words, the memory unit of the supervision apparatus can be configured to store in a structured manner the information relating to the different types of dangerous situations and the corresponding response actions. In this way, the computer can refer to such tables to quickly determine the appropriate action to take when a certain dangerous situation is detected, optimising the response process and reducing the risk of operational errors.

According to an example, the response action can be to stop the operation of one or more machines if it detects dangerous operations.

According to a further example, the response action may be to command the operation of the one or more machines at a reduced operating speed if it detects dangerous operations.

According to a further example, the supervision apparatus may comprise a signalling device, connected to the computer: in this case, the response action may be to activate a signalling device, in particular acoustic and/or optical, if it detects dangerous operations.

In some situations, the supervision apparatus may be configured to activate several actions simultaneously or in sequence, depending on the type and severity of the dangerous situation detected. For example, in the event that an imminent danger is identified, it may be necessary to immediately stop the operation of the plant or individual machines and, at the same time, activate an audible or optical warning device to alert the operator or safety personnel. Alternatively, the computer could decide to reduce the operating regime of the sending of alarm signals, in order to ensure that the risk is contained quickly and adequately.

Advantageously, the possibility of activating multiple actions allows a more versatile and precise response to various dangerous situations, further improving the operational safety of the plant.

According to one aspect, the computer may comprise an artificial intelligence engine trained by supervised or unsupervised learning algorithms. In other words, the computer can be provided with an artificial intelligence engine that uses advanced learning algorithms, both supervised and unsupervised, to analyse and interpret the collected data. The artificial intelligence engine is trained using specific datasets, carefully selected and structured to represent normal operational scenarios and dangerous situations. These datasets include historical data, simulations and typical conditions that allow the system to recognise patterns and anomalies, ensuring high reliability in the identification of dangerous operations. For example, the artificial intelligence engine can be trained by processing an enormous amount of footage, including material documenting injury or accident situations in industrial plants, allowing the system to immediately recognise dangerous operations as they occur. Thanks to this extensive training, artificial intelligence can more accurately distinguish potentially risky people, movements or situations. These algorithms allow the system to progressively improve its ability to detect dangerous situations, learning from the historical data and previous experiences, without the need for manual interventions or constant updates. Advantageously, the use of artificial intelligence makes it possible to optimise the efficiency and precision of the supervision system, adapting dynamically to new operating conditions or to unexpected variables. In addition, the continuous learning allows the apparatus to respond more quickly and accurately to evolving dangerous situations, improving the overall safety of the plant and reducing the risk of human errors or malfunctions of the traditional systems. According to one aspect, if present, the memory unit of the supervision apparatus may further be configured to store a standard state of the plant, comprising the predefined conditions of the one or more machines and of the safety apparatus in a normal operating situation. The computer may then be configured to compare the captured image data with that stored standard state, in order to detect any discrepancies indicating abnormal or dangerous situations. Based on this comparison, the computer can determine whether it is necessary to activate one or more response actions, ensuring an accurate and timely control of the operating conditions of the plant and helping to reduce the risks associated with errors or malfunctions. According to one aspect, the computer may be connected to the one or more machines and configured to receive from the one or more machines data representative of an operating state of the one or more machines and to detect dangerous operations based on a combined analysis of the data of the captured images and the data representative of the operating state of the one or more machines. In other words, the computer may be able to integrate the data from the captured images with those describing the operational status of the machines. For example, if the machine is running and an operator is in a dangerous area, the computer detects a dangerous situation. On the contrary, if the machine is not operational, the presence of the operator in a potentially dangerous zone will not be considered as an immediate risk. This approach makes it possible to make a more accurate assessment of dangerous situations, based not only on the images, but also on the actual state of activity of the machines, thus reducing the risk of false alarms.

Advantageously, this technical feature makes the operation of the supervision apparatus easier since it receives more data and it is therefore easier to identify the dangerous operations.

In accordance with one aspect, the computer may be connected to the safety apparatus and configured to receive from the safety apparatus data representative of an operational and/or functional state of the safety apparatus itself and to detect the dangerous operations based on a combined analysis of the data of the captured images and the data representative of the operational and/or functional state of the safety apparatus. In other words, the computer may be configured to receive and analyse data from the safety apparatus, which represents the operational and/or functional state of the apparatus. For example, if the computer detects by means of the images that an operator is in a dangerous area, but at the same time the data from the photocells (which would normally detect the presence) do not indicate any danger, the computer can detect that something is not compliant. In this case, the computer, despite the tampering of the photocells, can still detect the dangerous situation and activate the appropriate response. This combined analysis of the data from the images and the data of the safety apparatus allows an accurate and timely detection of possible risk situations.

According to a particularly advantageous embodiment, the computer can be connected to both the safety apparatus and the one or more machines and be configured to combine the data of the images, the data of the status of the machines and the data of the control apparatus, thus achieving a more complete assessment of the situation.

In accordance with one aspect, the computer may be configured to analyse the images captured by the visual device, detect the presence of foreign objects along the machining path, including tools, waste, or non-compliant materials, and activate the one or more response actions. In other words, the computer may analyse the images captured by the at least one visual acquisition device to detect the presence of foreign objects along the machining path, such as tools, waste or non-compliant materials. If it is detected, it automatically activates a response action. Advantageously, this approach allows a prompt intervention in the presence of objects that could compromise operational safety, reducing the risk of damage to the plant or injury to the operators. Of course, the dangerous operations are not always and necessarily a risk for the operator him/herself, but they can represent a danger to the integrity of the plant. In this case, a dangerous operation can be an action carried out by the operator, such as the insertion of non-compliant objects or the execution of unauthorised procedures, which puts the correct operation of the machines at risk and could cause damage, malfunctions or operational interruptions.

In accordance with one aspect, the supervision apparatus may comprise a module for tracking the presence of operators in the vicinity of the machining path and for identifying such operators: the computer is configured to determine the authorisation to access the areas for the identified operators and to carry out the one or more response actions in the event of unauthorised personnel. In other words, the supervision apparatus may be able to monitor the presence of the operators in the vicinity of the machining path and identify them. The computer determines whether or not the identified operator is authorised to access certain areas, based on predefined rules. If the presence of unauthorized personnel is detected, the system activates a response action, such as activating an alarm, recording the event. Advantageously, this technical feature increases the operational safety of the plant, preventing unauthorised entry into dangerous areas and preventing accidents. An application example could be an automated machine that allows only qualified personnel to enter the maintenance or intervention areas, while in the event of unauthorised access, the system immediately interrupts the operation of the plant and activates an alarm, thus preventing safety risks.

Further characteristics and advantages of the present invention will become clearer from the indicative, and therefore non-limiting, description below of a preferred embodiment of a plant for machining semi-products, in particular pieces of wood or the like, according to the present invention.

This description is set out below with reference to the accompanying drawings which are provided solely for illustrative and therefore non-limiting purposes, in which:

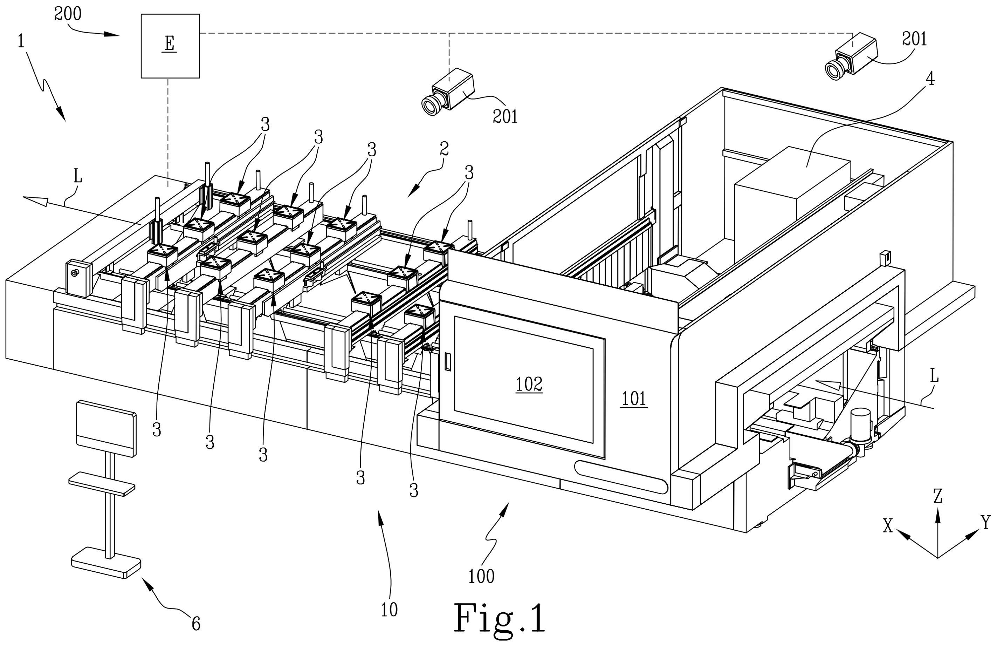

- Figure 1 illustrates a schematic view of an operating sequence of a preferred, example and therefore non-limiting embodiment of a plant for machining semi-products, in particular pieces of wood or the like, in accordance with the present invention;
- Figures 2A and 2B illustrate a plant of known type in two distinct operating configurations.

In accordance with the accompanying drawings, the reference numeral "1" indicates in its entirety a plant for the machining of semi-products, in particular pieces of wood or the like. In conjunction with the description of the plant 1, a preferred, example and therefore non-limiting embodiment is also illustrated of the method which can be carried out by means of the plant 1 itself.

According to the embodiment illustrated, by way of a non-limiting example, the plant 1 comprises a single machine 10 for machining a semi-product. In particular, the machine 10 is a machining centre. The machine 10 defines a machining path "L" for the semi-product.

The machine 10 comprises a base. The base rests on a substantially flat floor. The base supports a work table 2. The work table 2 defines a work area oriented according to a work surface substantially parallel to the floor on which the machine 1 rests. The work surface extends along a longitudinal axis "X" and a transversal axis "Y" perpendicular to the longitudinal axis. The machine 10 comprises a machining unit 4. The machining unit 4 is also movable along the transversal axis "Y" and along a vertical axis "Z" perpendicular to the longitudinal axis "X" and the transversal axis "Y". The vertical axis "Z" is, therefore, perpendicular to the work surface. The machining unit 4 comprises a spindle configured to retain and rotate a tool. The machine 10 comprises a control console 6 configured to allow an operator to control the machine 10. The control console 6 is positioned in an operator zone. The operator zone is the area where an operator is typically present to control the machine 10. The work table 2 has an operator side. The operator side is the side set up to be directly accessible by the operator present in the operator zone, for example, for the loading and unloading operations of the parts to be machined and for the configuration operations of the machine 10, such as setting up the work table 2. The operator side is the longitudinal side facing the operator zone where the control console 6 resides.

The work table 2 comprises one or more bars 20, in particular a plurality of bars 20. The bars 20 extend along the transversal axis "Y". The bars 20 are positioned side by side and parallel to each other. The bars 20 can be movable, either manually or automatically by means of the respective actuators, along the longitudinal axis "X", so as to be able to adjust their position within the work area.

Further, the machine 10 comprises one or more locking devices 3, in particular a plurality of locking devices 3. The locking devices 3 are configured to be coupled to the work table 2, in particular to the bars 20. The locking devices 3 are configured to support and lock the semi-product to be machined. In particular, the locking devices 3 are configured to support and lock the part to be machined, for example, on the work table 2 and within the work area.

The plant 1 comprises a safety apparatus 100. The safety apparatus 100 comprises a panel 101, which surrounds the machining unit 4. The machining unit 4 and the panel 5 are movable along the longitudinal axis "X". The panel 101 also comprises a door 102, which can be movable between a closed configuration, suitable for an operational step of the plant 1, and an open configuration, suitable for a maintenance step of the plant 1.

The safety apparatus 100 further comprises a photocell system (not illustrated) configured to detect the presence of an operator intending to access the work table 2. In particular, the photocell system is designed to ensure safety during loading, unloading and configuration operations of the machine 10. The safety apparatus 100 is configured to generate an acoustic and/or visual signal automatically if the photocells detect the presence of an operator within the work area during the operating steps of the machine 10. The plant 1 comprises a supervision apparatus 200. The supervision apparatus 200 is preferably connected to the machine 10 and to the safety apparatus 100.

The supervision apparatus 200 comprises at least one visual acquisition device 201 configured to capture images of the machining path "L" and generate data representative of these captured images, and a computer "E", connected to the at least one visual acquisition device 201 and configured to receive the above-mentioned data representative of the images captured and analyse the data in such a way as to detect dangerous operations carried out by the operator if the safety apparatus has not prevented it from being carried out.

At the functional level, the method for machining a semi-product provides that, during the machining of the machine 10, the safety apparatus 100 is configured to prevent an operator from carrying out dangerous operations along the machining path "L".

However, if, due to malfunctions or possible tampering, the safety apparatus 100 is unable to prevent such dangerous operations, the supervision apparatus 200 intervenes. The latter, by analysing the images captured by at least one visual acquisition device 201, is able to detect the actions not allowed carried out by the operator. The data representative of the captured images are processed by a computer "E", which analyses the information to identify any violations of the safety conditions, thus providing an additional level of control and operational safety.

Preferably, the supervision apparatus 200 comprises two visual acquisition devices 201. Preferably, said visual acquisition devices 201 are two video cameras.

Preferably, the computer "E" is configured to autonomously activate one or more response actions if it detects dangerous operations.

In particular, the computer "E" is configured to identify a predetermined type of dangerous operations and to autonomously activate the one or more response actions as a function of the type of dangerous operation identified. Preferably, the supervision apparatus 200 comprises a memory unit (not illustrated), connected to the computer "E", in which tables are pre-stored that correlate the predetermined types of dangerous operations to the response actions to be activated as a function of each type of dangerous operations: the computer "E" then autonomously activates the one or more response actions as a function of these tables.

Preferably, the memory unit of the supervision apparatus 200 is further configured to store a standard state of the plant, comprising the predefined conditions of the machine 10 and the safety apparatus 100 in a normal operating situation. The computer "E" is configured to compare the data of the captured images with this stored standard state, in order to detect any discrepancies that indicate abnormal or dangerous situations. Based on this comparison, the computer "E" can determine whether it is necessary to activate one or more response actions.

The response action may be a stoppage of the operation of the machine 10 if it detects dangerous operations.

The response action may be to command the operation of the machine 10 at a reduced operating speed if it detects dangerous operations.

The response action can be the activation of a alerting device, in particular acoustic and/or optical, if it detects dangerous operations. For this purpose, the supervision apparatus 200 may in fact comprise one or more alerting, acoustic or optical devices.

Clearly, depending on the type of dangerous situation, the computer "E" can perform one or more of the above-mentioned actions, either sequentially or simultaneously.

In particular, the computer "E" identifies a predetermined type of dangerous operations and autonomously activates one or more response actions, selecting them as a function of the correlations pre-stored in tables that associate each type of dangerous operation with specific response actions. Such response actions may include the stopping of the operation of the machine 10, the adjustment of its operating speed to a reduced level, or the activation of acoustic and/or optical signalling devices. Depending on the type of dangerous operation detected, the response actions can be performed independently by the computer "E", in sequence or simultaneously.

Preferably, the computer comprises an artificial intelligence engine (not shown) trained by supervised or unsupervised learning algorithms. This engine allows the system to process and interpret the data autonomously, improving the ability to detect dangerous operations and to activate appropriate response actions.

The artificial intelligence engine is trained using specific datasets, carefully selected and structured to represent normal operational scenarios and dangerous situations. These datasets include historical data, simulations and typical conditions that allow the system to recognise patterns and anomalies, ensuring high reliability in the identification of dangerous operations.

Preferably, the computer "E" is configured to receive from the machine 10 data representative of an operating state of the machine 10 itself and to receive data representative of an operating and/or functional state of the safety apparatus 100 and to detect dangerous operations based on a combined analysis of the data of the captured images, the data representative of the operating state of the machine 10 and the data representative of an operating and/or functional state of the safety apparatus 100.

Preferably, the computer "E" is further configured to analyse the images captured by the visual acquisition device 201, detect the presence of foreign objects along the machining path "L", including tools, waste or non-compliant materials, and activate the one or more response actions. Preferably, the supervision apparatus 200 comprises a module for tracking the presence of operators in the vicinity of the machining path "L" and for identifying such operators: the computer "E" is then configured to determine the authorization to access the areas for the identified operators and to operate the one or more response actions in the event of unauthorised personnel.

The present invention achieves the intended aims, eliminating the drawbacks highlighted by the prior art: in this regard, it should be noted that the integration of a supervision apparatus 200 provided with a visual acquisition device 201 and a dedicated computer "E" allows dangerous operations to be detected (and therefore dangerous situations for operators and/or for the plant 1 itself) with greater precision and timeliness than the traditional systems. This approach introduces a further level of control, capable of monitoring the status of the safety apparatus 100, preventing non-compliant behaviour by operators and promptly diagnosing faults or anomalies of the machine 10 and/or the safety apparatus 100. In this way, the invention not only improves operational safety, but reduces unplanned downtime and increases the overall efficiency of the plant 1, while ensuring a greater robustness of the entire safety system.

## Claims

1. A plant (1) for machining a semi-product, in particular a part or the like, comprising:
- one or more machines (10) configured for machining the semi-product;
- a machining path (L) for said semi-product passing through said one or more machines (10);
- a safety apparatus (100), integral with and/or connected to said one or more machines (10), suitable for preventing an operator from performing dangerous operations in said machining path (L);
**characterized in that** said plant (1) further comprises a supervision apparatus (200) comprising:
- at least one visual acquisition device (201) configured to capture images of the machining path (L) and to generate data representative of said captured images;
- a computer (E), connected to said at least one visual acquisition device (201) and configured to receive said data representative of the captured images and analyse said data in such a way as to detect dangerous operations performed by the operator if the safety apparatus has not prevented them from being performed.

2. The plant (1) according to claim 1, wherein said computer (E) is configured to activate one or more response actions autonomously if it detects said dangerous operations.

3. The plant (1) according to claim 2, wherein said computer (E) is configured to identify a predetermined type of said dangerous operations and to activate said one or more response actions autonomously as a function of the type of dangerous operation identified.

4. The plant (1) according to claim 3, wherein said supervision apparatus (200) comprises a memory unit, connected to said computer (E), in which tables are pre-stored that correlate the predetermined types of dangerous operations to the response actions to be activated as a function of each type of dangerous operations; said computer (E) being configured to autonomously activate said one or more response actions as a function of said tables.

5. The plant (1) according to any one of the claims 2 to 4, wherein said response action comprises one or more of the following:
- stopping the operation of said one or more machines (10) if it detects said dangerous operations;
- instructing the operation of said one or more machines (10) at a reduced operating speed if it detects said dangerous operations;
- activating a signalling device, in particular acoustic and/or optical, if it detects said dangerous operations, said supervision apparatus (200) comprising an alerting device, connected to said computer (E).

6. The plant (1) according to any one of the preceding claims, wherein said computer (E) comprises an artificial intelligence engine trained using supervised or unsupervised learning algorithms; preferably trained by datasets.

7. The plant according to any one of the preceding claims, wherein said supervision apparatus (200) comprises a memory unit configured to store a standard state of the plant (1), comprising data regarding the predefined conditions of the one or more machines (10) and/or of the safety apparatus (100); said computer (E) being configured to detect said dangerous situation as a function of a combined analysis performed by comparing the data representative of the captured images with said stored standard state, in order to detect said dangerous operations.

8. The plant (1) according to any one of the preceding claims, wherein said computer (E) is configured to receive from said one or more machines (10) data representative of an operating state of the one or more machines (10) themselves and to detect said dangerous operations based on a combined analysis of the data of the captured image and the data representative of the operating state of said one or more machines (10).

9. The plant (1) according to any one of the preceding claims, wherein said computer (E) is configured to receive from said safety apparatus (100) data representative of an operational and/or functional state of the same safety apparatus (100) and to detect said dangerous operations based on a combined analysis of the data of the captured images and of the data representative of the operational and/or functional state of said safety apparatus (100).

10. The plant (1) according to any one of the preceding claims, wherein said computer (E) is configured to analyse the images captured by the visual acquisition device (201), detect the presence of foreign objects along the machining path (L), including tools, waste or non-compliant materials, and activate the one or more response actions.

11. The plant (1) according to any one of the preceding claims, wherein said supervision apparatus (200) comprises a module for tracking the presence of operators in the vicinity of the machining path (L) and for identifying said operators; said computer (E) being configured to determine the authorization to access the areas for said identified operators and to activate said one or more response actions in the event of unauthorized personnel.

12. A method for machining a semi-product, in particular a piece of wood or the like, in particular operable by a plant (1) for machining a semi-product, comprising the steps of:
- performing one or more machining operations on the semi-product by means of one or more machines (10), said semi-product being moved along a machining path (L) passing through said one or more machines (10);
- preventing an operator from performing dangerous operations in said machining path (L) by means of a safety apparatus (100);
**characterised in that** it comprises the following steps:
- capturing images of the machining path (L) and generating data representative of said captured images, by means of at least one visual acquisition device (201);
- analysing said data representative of the captured images in such a way as to detect dangerous operations performed by the operator if the safety apparatus (100) has not prevented them from being performed, by means of a computer (E).

13. The method according to claim 12, comprising a step of autonomously activating one or more response actions if it detects said dangerous operations; preferably said at least one or more response actions comprising one or more of the following:
- stopping the operation of said one or more machines (10) if it detects said dangerous operations;
- instructing the operation of said one or more machines (10) at a reduced operating speed if it detects said dangerous operations;
- activating a signalling device, in particular acoustic and/or optical, if it detects said dangerous operations, said supervision apparatus (200) comprising an alerting device, connected to said computer (E).

14. The method according to claim 13, wherein said step of analysing said data representative of the captured images comprises a sub-step of identifying a predetermined type of said dangerous operations and wherein said step of autonomously activating one or more response actions is carried out as a function the type of the dangerous operation identified; preferably, said step of autonomously activating one or more response actions is carried out on the basis of previously stored tables in which predetermined types of dangerous operations are correlated with the response actions to be activated as a function of each type of dangerous operation.

15. The method according to any one of claims from 12 to 14, wherein said step of analysing said data representative of the captured images is carried out by an artificial intelligence engine trained using supervised or unsupervised learning algorithms, preferably trained by datasets.

16. The method according to any one of claims from 12 to 15, wherein said one or more machines (10) are configured to generate data representative of an operating state of the one or more machines (10) themselves and/or wherein said safety apparatus (100) is configured to generate data representative of an operating and/or functional state of the same safety apparatus (100) itself;
said step of analysing said data representative of the captured images being carried out by combining said data representative of the captured images with said data representative of an operating state of the one or more machines (10) and/or with said data representative of an operating and/or functional state of the same safety apparatus (100).

17. The method according to any one of claims from 13 to 16, wherein said step of analysing said data representative of the captured images further comprises the sub-steps of tracking the presence of operators in the vicinity of said machining path (L), identifying said operators and determining the authorisation to access certain areas for said identified operators; said step of autonomously activating one or more response actions being carried out in the event of unauthorised personnel.
